Europäisches Patentamt

(19) European Patent Office (11) Publication number: **0 067 294**

Office européen des brevets **B1**

(12) **EUROPEAN PATENT SPECIFICATION**

(45) Date of publication of patent specification: 08.04.87    (51) Int. Cl.⁴: **G 06 F 15/16, G 06 F 13/00**

(21) Application number: **82103561.5**

(22) Date of filing: **27.04.82**

(54) **Data processing apparatus with master/slave control.**

(30) Priority: **12.06.81 US 272825**

(43) Date of publication of application:
**22.12.82 Bulletin 82/51**

(45) Publication of the grant of the patent:
**08.04.87 Bulletin 87/15**

(84) Designated Contracting States:
**DE FR GB IT**

(56) References cited:
**DE-A-1 424 762**
**FR-A-1 440 771**
**FR-A-2 250 448**

**IBM TECHNICAL DISCLOSURE BULLETIN, vol. 20, no. 5, October 1977, pages 1782-1783, New York, USA; A. PAUPORTE et al.: "I/O sharing mechanism in a dual CPU system"**

**IBM TECHNICAL DISCLOSURE BULLETIN, vol. 8, no. 8, January 1966, pages 1078-1079, New York; USA; H. BARDSLEY: "CPU priority with shared storage"**

(73) Proprietor: **International Business Machines Corporation**
**Old Orchard Road**
**Armonk, N.Y. 10504 (US)**

(72) Inventor: **Stucka, Stephen Edward**
**3640 Hayden Place No.5**
**Boulder Colorado 80301 (US)**

(74) Representative: **Grant, Iain Murray**
**IBM United Kingdom Limited Intellectual Property Department Hursley Park Winchester Hampshire SO21 2JN (GB)**

EP 0 067 294 B1

Courier Press, Leamington Spa, England.

### Description

The present invention relates to data processing apparatus with master/slave control maintaining an exclusive control for system-status changing events in multi-unit system whereby system integrity is ensured.

Many data processing systems and communication systems employ a plurality of multiprocessors. Each of the multiprocessors in turn can include a plurality of individual programmable units. Many of these processors are switchable over a multipath configuration wherein two processors share a common resource that one can only use at a time or change the system status of such shared resource, such as a magnetic tape drive, or a disk file, or a mass storage type of disk file type, as shown in U.S. Patent 4,019,204. The latter contains so much data that the likelihood of sharing is much higher than with a magnetic tape drive.

Heretofore access to such devices could be reserved through a complex set of system interlocks including a so-called reserve-release wherein the device was dedicated to a particular CPU (Central Processing Unit) of a processing subsystem. When such devices are multipathed, each path must "know" the switched status of a shared resource. To this end, a complex switching unit, US—A—3,372,378, has been employed with complex status indicating circuits. It is desired to simplify the multipath setups by eliminating the switching unit. The switch status circuit was a separate entity. It is better to have the status available to all controlling programmable units at the same time as opposed to being stored in a remote switching unit. In this manner, system configurations can be simplified but at the expense of managing a master/slave protocol to ensure system integrity. The problem is to avoid replacing one central control with another.

IBM Technical Disclosure Bulletin, Vol 20, No 5, October 1977, Pages 1782 and 1783 discloses one arrangement of reserve-release interlocks to control access to I/O devices by a pair of CPU's.

Additionally, it is pointed out that a very specialised form of de-centralised ownership control of a bus, which is a resource in its own right, is disclosed in FR—A—2,250,448. In the arrangement of this document the potential owners of the bus are connected in order "along" the bus and the possibility of owning the bus is offered to each owner in turn. Ownership can either be accepted or declined. This kind of arrangement is limited to the ownership of a single resource and imposes the constraint of "having to wait one's turn" to find out if the resource is free. It is realistically adapted only to resolving the ownership of the connecting medium. The arrangement of the present invention eliminates the above limitation in that, while one may have to wait one's turn to own a resource, one does not have to wait ones turn to find out and, where there are a plurality of resources that can be potentially owned, this is a distinct advantage.

Accordingly the present invention provides data processing apparatus including a plurality of processing units and a shared resource, status means storing (and thus defining) the shared status of the resource, each processing unit potentially requiring access to the shared resource and thus, from time to time, to change the shared status, consequentially generating a request signal for control of the status means, it, having the inherent capability of resetting the status means; and a master/slave facility for determining at a given time which one (and only one) of the processing units is to have resetting access to the status means, characterized in that

(a) the master/slave facility is distributed equally among the processing units, in the form of an equivalent logic circuit (see Fig. 5 or Fig. 7) in or for each processing unit, the logic circuits being interconnected for transmission of signal pairs;

(b) each logic circuit has four stable states (conveniently master, release, slave and request states) each state being indicated uniquely by a signal pair output from that logic circuit;

(c) each logic circuit can switch from a master state to a release state on receipt of a request state signal pair, from a release state to a slave state, from a slave state to a request state on receipt of a request signal from its associated processing unit and from a request state to a master state only on receipt of a release state signal pair, and, in the absence of fault in no other sequence; and

(d) the attainment of a master state by a logic circuit grants resetting access by the associated processing unit, to the status means.

Put another way, each programmable unit adapted to operate in a multi-unit asynchronous control environment includes operational state indicating means indicating a switch control state of that programmable unit. The programmable unit also includes means for receiving the operational state signals of at least one other programmable unit which is interconnected for sharing a resource, for example. The units each have one of two possible quiescent steady states, one of which is a so called master state, in which the unit having that master state is authorized to effect system status changing action. All other units are not in the master state and are inhibited from changing the system status in any manner whatsoever. Such other units can process data signals and operate with all the units in a present switched state of the system.

The master state can be shifted from one of the programmable units to any other of the programmable units. When any of said other programmable units are in a so-called slave mode wherein no system status changing action can be initiated, such other units can request the programmable unit in the master state to relinquish its master state. A master state programmable unit receives a request to become master signal and upon reaching a predetermined break point transfers the master state to the requesting unit and then immediately assumes a slave state.

The requesting unit now becomes the unit with the master state and can effect system status changing action, whereas the first mentioned programmable unit can no longer effect system status changing actions. An example of such action is switching the configuration of a data processing system or subsystem.

In other words, a unit adapted to be incorporated into a plural unit system has state indicating means. Each of the other units in the system also has similar state indicating means. All of the units continuously exchange their state indicating signals. Selective alteration of an emitted state indicating signal by any of the units initiates a change of state of another one of said units. That is, the state indicating signals control the system capability of each of the units and in turn are exchanged for moving system state changing capability between the various units.

The foregoing and other objects, features and advantages of the invention will be apparent from the following more particular description of preferred embodiments of the invention, as illustrated in the accompanying drawings.

In the drawings,

FIG. 1 is a block diagram of an embodiment of the invention;

FIG. 2 is a truth table showing the operational states and the state changing signals used in the embodiment of Fig. 1;

FIG. 3 is a timing diagram illustrating shifting of system control states;

FIG. 4 is a block diagram of a more complex embodiment;

FIG. 5 is a simplified diagram of one form of master/slave control logic;

FIG. 6 is a block diagram of a further embodiment;

FIG. 7 is a simplified diagram of a PLA implementation of the logic of Fig. 5.

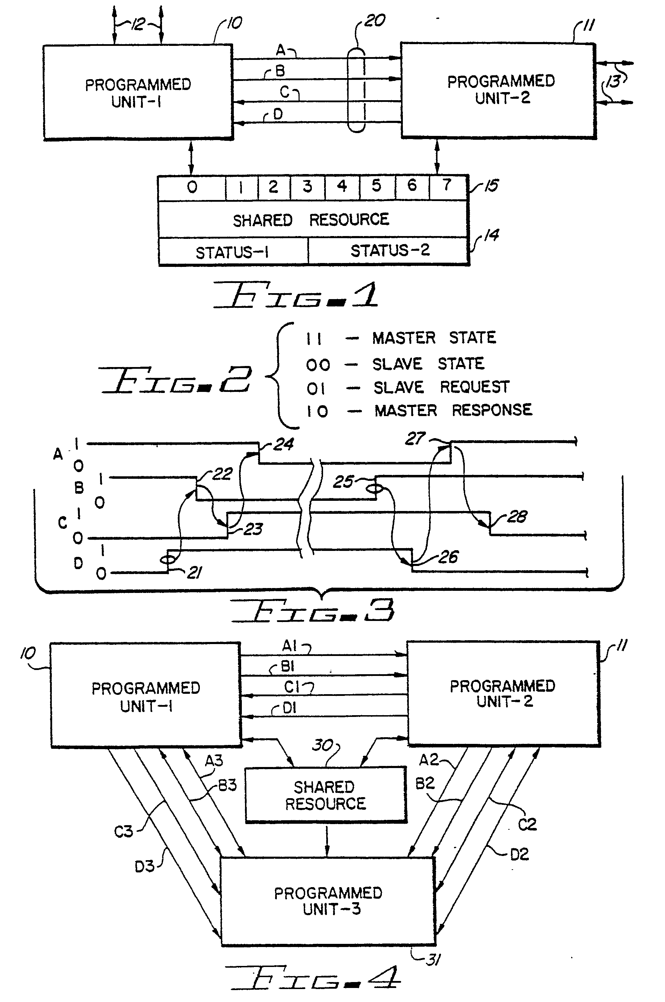

Referring now to the drawing, like numerals indicate like parts and structural features in the various diagrammatic illustrations. In Fig. 1, programmed units 1 and 2, respectively enumerated 10 and 11, can be the control unit illustrated in U.S. Patent 3,716,837. Such control unit further includes logic illustrated elsewhere in this application for practicing the present invention. Such control units are connected to a plurality of hosts or CPU's via channel connections illustrated by double-ended arrows 12 and 13. A shared resource 14, sharable by all of the CPU's via units 10 and 11, includes a plurality of independent operating units 15 and further enumerated 0 through 7 for indicating the device address of eight such units. An example of such unit is shown in U.S. Patent 4,019,204. Additionally, the switched status of resource 14 can be indicated in separate memories of the semiconductive type labeled status 1 and status 2. That is, status memory 1 is accessible by unit 10, while status memory 2 is accessible by programmed unit 2, as will be later explained. When the system switched status changes, the respective programmed units access the status 1 and status 2 memories for updating the switched status of the units 15. Such status includes an indication of which ones of units 15 are active (not available for assignment) and which ones are active via a local connection made by a unit 10, 11 for status inquiry. These two-level status indicators enable compliance with popular computer input-output control procedures. Each unit 10, 11 has status of all unit 15 activity plus separate status indications on unit 15 due to a local connection.

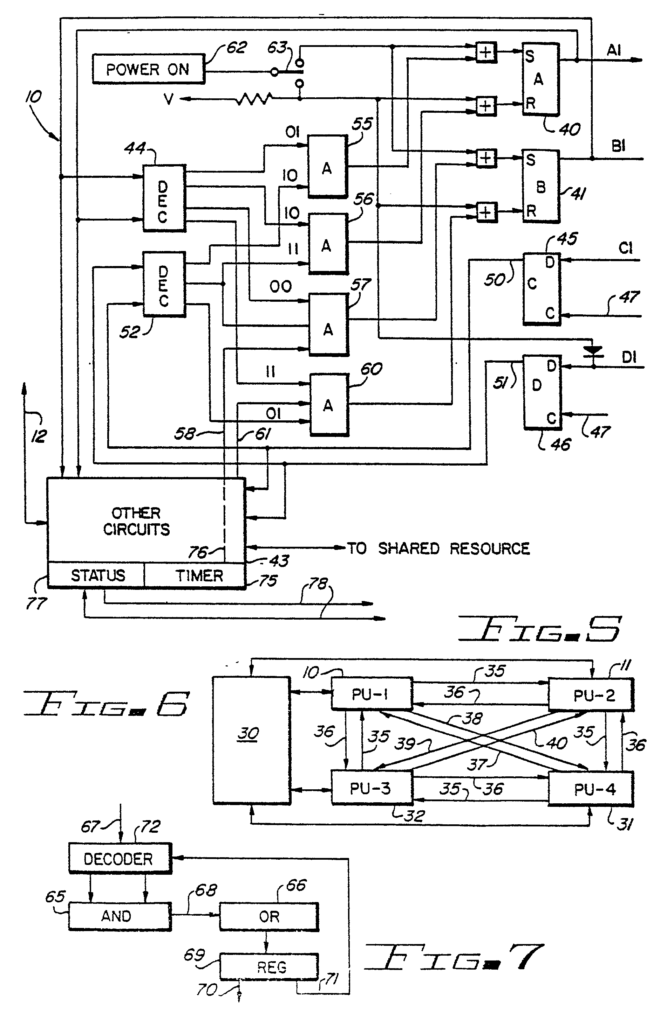

Because a plurality of processors, respectively indicated by double-headed arrows 12, 13, may wish to independently and asynchronously access any one of the shared resource units 15, suitable controls have to be effected in units 10 and 11 for ensuring unique access to the units at any given instant. This limitation is important for data integrity purposes. To this end, four state indicating lines 20 connect units 10 and 11. The lines A and B supply the unit 10 state indicating signals to unit 11. In an identical matter, lines C and D supply states indicating signals of unit 11 to unit 10. Each of the units 10 and 11 can be in one of two system controlling states. As seen in Fig. 2, a 11 (binary) on either lines AB or CD indicates that the sending unit is in a so-called master state. For example, when unit 10 is in the master state, it has the sole authority to alter the switch status of the Fig. 1 illustrated subsystem configuration. For example, if shared resource unit 3 was connected through unit 11 to a CPU indicated by arrow 13, unit 11 cannot disconnect a unit until it is in the master state. On the other hand, unit 10 having switch status control, could indicate the deselection of unit 3. However, in most instances of data processing subsystems, unit 10 would be programmed not to deselect unit 3 of units 15 unless it was in fact connected to a processor indicated by arrow 12. In the prior art, unit 11 could deselect unit 3 at any time without regard to actions or status of other units, such as unit 10. Therefore, in a data processing subsystem, to deselect or select a one of the units 15, the unit 10 or 11 must be in the master state and the switched status of a one unit 15 must be through that unit. The latter restriction does not apply to practicing the present invention, rather it is an arbitrary rule of operation.

The other steady state of units 10 and 11 is called a slave state, as indicated by two zeros on the lines 20. This state 00 (binary) indicates that the emitting unit is in an operational state requiring no change in switch status. Therefore, unit 11 has no need to update its status. Therefore, unit 10 remains in the master state so long as unit 11 does not request the master state.

The slave request state 01 (binary) is the first action by a slave stage unit, such as unit 11. In requesting that the master state by assigned to it, this is illustrated in Fig. 3 by the line going from the zero to the one state at 21. Unit 10, in the master state, senses the request by sensing the state 01 in the line CD. If unit 10 desires to hold on to the master state, it will not change the status on lines AB. On the other hand, if unit 10 has no reason to continue in the master state, it responds to the 0 to 1 transition 21 on line D to change the signal on line B from the 1 to the 0 state, as at 22. Unit 11 senses the change in the B state. At this time unit 10 no longer is in the master state — i.e., neither unit 10 or 11 can change the switched status of the illustrated subsystem. At 23, unit 11 responds to the unit 10 line B response 22 by changing its C line from 0 to 1. At this point in time, unit 11 is in the master state and has full control of the subsystem switch status. Unit 10 responds to the line C change 23 to assume the slave state by changing line A from 1 to 0 at 24. The master state now has moved from unit 10 to unit 11.

As subsystem events occur, unit 10 may again wish to assume the master state. Unit 10 then changes its B line signal from 0 to 1 at 25. Unit 11 responds to the change 25 to change its line B state from 1 to 0 as at 26. Unit 10 then responds by assuming the master state by switching line A from 0 to 1 at 27. The reverse control exchange is completed at 28 by unit 11 changing the C line state signal from 1 to 0. Signals A—D are allowed but one change at any given instant. This restriction yields a so-called Gray code sequence for eliminating communication errors between asynchronously operation units.

In the above-described manner any number of units in a multi-unit system can be controlled. By limiting one unit to a master state and having all other units in a slave state interchange of the master state to any one of the plurality of units can be achieved by the illustrated four state signal lines 20 between each of the units. Two interconnection control topologies include every unit connected to every other unit; and a so-called ring topology in which each unit is connected to two other units, all of the units being connected in a ring fashion. In the event of a plurality of slave units all requesting master state from a master unit at a given time, a priority scheme assigns the master state to one of the requesting units.

Fig. 4 shows a three unit switched system having a common or shared resource 30. A first programmed unit 10 is connected to a second programmed unit 11 in the manner shown in Fig. 1. Additionally, a third programmed unit 31 is connected to units 10 and 11 and cooperate with units 10 and 11, as described with respect to Fig. 1. All of the units 10, 11 and 31 have access to shared resource 30, which can be constructed in the same manner as resource 14 as shown in the documents incorporated by reference. The operation of the Fig. 4 illustrated embodiment is that, if unit 10 is a master unit, then unit 11 raises its slave request signal 01 over lines C1, D1 to unit 10 and simultaneously over lines A2, B2 to unit 31. When the 10 (binary) state — i.e., master response, is received by programmed unit 2 over lines A1B1 from units 10, unit 11 then supplies master indicating signals both to units 10 and 31. Unit 31, when receiving the slave request signal 01 from unit 11 while simultaneously receiving the continuous master state signal over line C3, D3 from unit 10, merely ignores the slave request signal. Accordingly, using the above-described procedure and the four lines illustrated between each of the units 10, 11 and 31 of Fig. 4, it is readily seen that the master state can be shifted from any one of the three units to any other of the three units.

In the event both units 11 and 31 are requesting master state from unit 10 at the same time, unit 10 must resolve the simultaneous request using known priority techniques. Unit 10 acknowledges the master response state 10 to the unit which will assume the master state. All other units will receive a 01 signal, indicating denial of the request. When unit 11 assumes the master state, unit 11 sends binary 11 over C1D1, A2B2. Unit 10 then sends the slave state signal to all other units, such as unit 31. This broadcast of status at status-changing time keeps the entire system tightly coupled.

A four-unit shared-resource arrangement is shown in Fig. 6 wherein each of the single arrowed lines, such as lines 35, 36, correspond respectively to the AB and CD lines of Figs. 1 and 4. In this situation, the priority scheme of each of the units when in the master state assigns each of the slave units 11, 31, 32, when unit 10 is master, a unique number. The priority between the three requesting units is resolved using known priority schemes. As the master state is shifted from one unit to another, each of the units may track where the master state resides and could adjust its own priority schemes when it becomes master in accordance with such tracking.

Fig. 6 can also be configured in a ring configuration by deleting the interconnection lines 37, 38, 39, and 40, leaving lines 35, 36 as shown. As such, each of the units 10, 11, 31 and 32 have a four-wire state-indicating interconnection to two units in the multi-unit system. One ring, consisting of lines 35, goes in a clockwise direction, while a second ring, consisting of lines 36, goes in a counterclockwise direction. The "master" signals propagate in one of the directions while "request for master" signals propagate in a direction opposite to the one direction. For example, when unit 10 is the master and unit 31 desires to be master it supplies its request through a unit 11 or 32. The direction of request for master propagation is arbitrarily fixed in a static or dynamic manner in each system. Therefore, in addition to the circuits illustrated in this application, the intervening unit, unit 32 for example, when it receives a request for master from unit 31, it cannot ignore that request — it must relay it to unit 10. To transfer a master state then is from unit 10 to unit 32 then to unit 31, one unit being master at all times except during the transition period described with respect to Fig. 3.

In a general case, a ring configuration may have any number of interconnected units. Therefore, non of the units in a slave state will have information indicating which unit is currently in the master state. Identifying the location of the master state requires additional communication between the units. While this communication can be achieved in diverse ways, a preferred way is to store the location of the master state in the common resource. Then program means (not shown) in the respective units respond to such unit becoming master records its location identifying signals in the common resource. Any unit then identifies the master state location by accessing the recorded state; thereby a single recording tracks the master state for all units in the slave state.

Fig. 5 illustrates one set of logic circuits usable in unit 10 for practising the present invention. It is to be understood that an identical set of circuits reside in unit 11, except that terms AB and CD are interchanged. The Fig. 5 illustration shows the logic of connection which, while in hardware form, can be implemented with equal or better facility in programmable form or in programmable logic arrays, as later discussed. Fig. 5 illustrates how a machine state indication continuously supplied to other units of a multi-unit system effects control of system status-changing actions.

The operational state of the unit is indicated by latch -A/40 (also termed A-latch 40) and latch -B/41 (also termed B-latch 41), corresponding respectively to states A and B. Latches 40 and 41 supply state indicating signals respectively over lines A1/B1. Latches 40, 41 are also connected to other circuits 43 corresponding to the circuitry shown in U.S. Patent 3,716,837, for example. The state-indicating lines A1/D1 are also connected to decode 44, which emits the binary operational state signals 00 through 11, as set forth in the Fig. 2 truth table.

The Fig. 5 circuits also include operational state receiving means constituting lines C1 and D1. A pair of latches 45, 46, of the D-type, capture the received operational state signals at the D input by a set of clock signals from a clock source (not shown) supplied over lines 47. Latches 45, 46 supply the received and captured state signals over lines 50 and 51 to other circuits 43 and to decode 52. Decode 52 supplies a decoded set of binary state-indicating signals 01 through 11. Since the logic represented by the circuits of Fig. 5 requires no action whenever another unit is in the slave state and is not requesting the master state, the operational state "00" need not be decoded. Other circuits 43 may decode the received "00" state for tracking purpose or for reliability checking.

The decoded binary states signal from decoders 44, 52 are used to set and reset latches A and B under partial control of other circuits 43, as will become apparent. To set latch 40, AND circuit 55 responds to the decoder 44 output 01 and the decoder 52 output 10 to supply a setting signal. In a similar manner, latch 40 is reset by AND circuit 56 responding to the 10 signal of decode 44 and the 11 signal of decode 52.

B-latch 41 is set and reset under selective control by other circuits 43 and the decode 44, 52 decoded output. B-latch 41 is set to the active condition by AND circuit 57. In response to the 00 signal from decode 44 the 11 signal from decode 52 and a request for master state signal from other circuits 43 as received over lines 58. In this regard other circuits 43 include a programmable processor, such as shown in U.S. Patent 3,716,827. A connected CPU, such as shown in U.S. Patent 3,400,371, may have actuated other circuits 43 via connection 12, a channel connection set forth in U.S. patent 3,303,476, that one of the units 15 is to be deselected. If the unit 10 of Fig. 5 is in the slave mode, it cannot deselect such a unit until it assumes the master state. Accordingly, line 58 is then actuated by other circuits 43 for enabling AND circuit 57 to set B-latch 41 to the active state. This typical action requests the master state in response to a CPU channel command.

B-latch 41 is reset by AND circuit 60 in response to decode 44 "11" output and a decode 52 "01" output. AND circuit 60 therefore responds to a request for a master state received over line C1/D1. However, other circuits 43 have a control line 61 to AND circuit 60. That is, other circuits 43 may be in a state wherein it requires a master state. Accordingly, AND circuit 60 is blocked from passing the master state request until other circuits 43 have completed their appropriate functions. An example of such a delay is that other circuits 43 are already in the process of selecting or deselecting one of the units 15 of Fig. 1. In any event, as soon as circuits 43 can allow the master state to be transferred out of the unit 10, AND circuit 60 is enabled by an appropriate control signal on line 61 for resetting B-latch 41. From all of the above it is seen that once B-latch 41 of a master unit has been set, further activity in switching the master mode to another unit is completely automatic by using the Fig. 5 illustrated logic.

Power-on circuit 62 is connected via momentary switch 63 to the OR circuit inputs of latches 40, 41. During power-on sequencing, circuit 62 momentarily actuates switch 63 (an electronic switch) to supply a single pulse to set A latch 40 and B latch 41 placing the unit in the master state. All other units reset their respective latches 40, 41 to assume the slave state. This selection can be manually set for enabling a reliable system start-up.

Fig. 7 is an abbreviated diagram of a programmable logic array (PLA) in which the logic arrangement of Fig. 5 can be conveniently employed. It is to be understood that the Fig. 7 illustrated PLA may be used for other functions within a control unit and therefore the functions illustrated in Fig. 5 may be intermeshed or otherwise interleaved between functions not pertinent to the practice of the present invention. The PLA includes an AND array 65 and an OR array 66. Both of the arrays are constructed using known PLA techniques. Input logic signals are received over a plurality of lines selectively indicated by single-headed arrow 67. Such lines include the output line of latches 40, 41, 45 and 46. The output of AND array 65 is supplied to the OR array

(sometimes called read array) 66 via a set of connections 68, termed word lines. The output of the OR array 66 is captured in a suitable register 69, which staticizes the output signals over a set of lines 70 and a set of feedback signals over lines 71. Latches 40, 41, 45 and 46 may be within register 69. The input lines C1D1 are included in lines 67 and gated by known PLA gating techniques to register 69. In any event, feedback lines 71 are connected to a partitioned signals, derived from the lines 71 and 67 signals, into AND array 65 in a known manner.

Referring back to Fig. 5, in a high performance data subsystem, it may be desired to move the master state around on a time slotted basis. In this regard, a timer 75 is included in other circuits 43. On a time out, line 58 is actuated by timer 70, as indicated by a dotted line 76. Accordingly, the status memory of Fig. 1 may be included in memory 77 of other circuits 43. Interchange of data signals from memory 77 to other units under control of other circuits 43 is via lines 78.

Thus there has been disclosed a programmable unit adapted to operate in a multi-unit asynchronous-control environment, comprising first means indicating an operational state of said unit second means, including state signal receiving means, for indicating an operational state of another unit adapted to be connected to and operate with said programmable unit each said indicating means capable of indicating: master state for indicating system configuration control, slave state indicating an operational state not requiring system configuration control activity, request state for indicating a need for a master state, and a release state indicating no need for a master state presently resident in such unit, other circuit means adapted to be connected to a resource means sharable with said another unit and including status means indicating status of said sharing of said resource means between said programmable unit and said other unit; and logic control means respectively connected to said first and second means and to said other circuit means and each said logic control means having plural means respectively to: respond to said master state for effecting a system status changing action a slave state enabling operation independent of any system status changing action, a request state for acquiring said master state to said unit, and a release state for releasing said master state to another unit.

Each of said means may include first and second latches supplying said state signals as two binary signals to said logic control means and said other circuit means, and said latches in said first means supplying said state signals as output signals of said programmable units whereby said latches both indicate machine state and communication protocol states for effecting shifting of system configuration control between a plurality of units in a multi-unit subsystem.

The logic control means may be a programmable logic array and each of said plural means of said logic control means being a set of logic connections within said programmable logic array.

The programmable unit may include a plurality of said second means whereby a plurality greater than two of said programmable units can be interconnected including means for shifting system configuration control between such means via machine state indications.

The other circuit means may include status memory means for indicating the switch status of a plural unit system to which it is attached.

There is also disclosed in a multi-unit control having a control portion at each of the multi-units, having means indicating a master state enabling respective ones of said units to effect a system status changing action and further means indicating a plurality of other states inhibiting such respective units from any status changing action; means indicating a request for said master state, said request being one of said other states; means indicating a release of said master state; and means indicating a slave state wherein there is no status changing action required, and communication means connecting each of said units in said multi-unit control for continuously exchanging said state signals whereby all units in said multi-unit control know the system switched status whereby any one and only one of said units is permitted to activate a system status changing action only when in said master state, together with a method of operating a multi-unit system having a plurality of switching nodes respectively connecting a plurality of units including the steps of designating one of said units as the sole unit to switch any one of said units, indicating in each of said nodes the system configurations as well as which node has the master state; and selectively actuating one of said nodes not having said switching authority to request switching authority from said node having said master state and simultaneously informing all other units of said request and shift of master control, whereby one and only one node can switch system configuration and no other switching occurs until switch status has been exchanged.

**Claims**

1. Data processing apparatus including a plurality of processing units (10, 11, 31, 32) and a shared resource (15, 30), status means (14, 77) storing (and thus defining) the shared status of the resource, each processing unit potentially requiring access to the shared resource and thus, from time to time, to change the shared status, consequentially generating a request signal for control of the status means, it having the inherent capability of resetting the status means; and a master/slave facility for determining at any given time which one (and only one) of the processing units is to have resetting access to the status means, characterized in that

(a) the master/slave facility is distributed equally among the processing units, in the form of an equivalent logic circuit in or for each processing unit, the logic circuits being interconnected for transmission of signal pairs;

(b) each logic circuit has four stable states (conveniently master, release, slave and request states) each state being indicated uniquely by a signal pair output from that logic circuit;

(c) each logic circuit can switch from a master state to a release state on receipt of a request state signal pair, from a release state to a slave state, from a slave state to a request state on receipt of a request signal from its associated processing unit and from a request state to a master state only on receipt of a release state signal pair, and, in the absence of fault in no other sequence; and

(d) the attainment of a master state by a logic circuit grants resetting access by the associated processing unit to the status means.

2. Apparatus as claimed in claim 1 wherein each logic circuit is based on a latch pair (40, 41) with feed back and control circuitry (44, 52, 55, 56, 57, 60; see Fig. 5) or is in the form of a programmable logic array or part thereof.

3. Apparatus as claimed in claim 1 or claim 2 wherein there are three or more processing units, concurrent request states being resolved on a priority basis.

4. Apparatus as claimed in any preceding claim wherein each processing unit generates a timer based request signal (75, 76 Fig. 5) whereby master status can be time slotted around the processing units.

5. Apparatus as claimed in any preceding claim in which the logic circuits are coupled in a ring formation and the identity of the current master processing unit is stored in the shared resource.

## Patentansprüche

1. Datenverarbeitungsvorrichtung mit einer Anzahl von Verarbeitungseinheiten (10, 11, 31, 32) und Gemeinschaftsbetriebsmitteln (15, 30), Statusmitteln (14, 77), welche den Status der gemeinschaftlichen Benutzung der Betriebsmittel speichern (und damit definieren), wobei jede Verarbeitungseinheit potentiell Zugriff auf die Gemeinschaftsbetriebsmittel und damit von Zeit zu Zeit eine Änderung des Gemeinschaftsstatus verlangt, folglich ein Anforderungssignal für eine Steuerung der Statusmittel erzeugt und die inhärente Fähigkeit der Rücksetzung der Statusmittel hat; und einer Master/Slave-Einrichtung zur Bestimmung zu jeder gegebenen Zeit, welche der (und nur eine der) Verarbeitungseinheiten Rücksetzzugriff auf die Statusmittel haben, soll, dadurch gekennzeichnet, daß

(a) die Master/Slave-Einrichtung in Form einer Äquivalentlogikschaltung in oder für jede Verarbeitungseinheit gleich auf die Verarbeitungseinheiten verteilt ist, wobei die Logikschaltungen zur Übertragung von Signalpaaren untereinander verbunden sind;

(b) jede Logikschaltung vier stabile Zustände (zweckmäßig Master-, Freigabe-, Slave- und Anforderungszustände) hat, wobei jeder Zustand eindeutig durch eine Signalpaarausgabe der Logikschaltung angegeben wird;

(c) jede Logikschaltung von einem Master-Zustand auf einen Freigabezustand auf Erhalt eines Anforderungszustands-Signalpaares, von einem Freigabezustand auf einen Slave-Zustand, von einem Slave-Zustand auf einen Anforderungszustand auf Erhalt eines Anforderungssignals von der ihr zugehörigen Verarbeitungseinheit und von einem Anforderungszustand auf einen Master-Zustand nur auf Erhalt eines Freigabezustands-Signalpaares und bei Störungsfreiheit in keiner anderen Folge schalten kann; und

(d) das Erreichen eines Master-Zustands durch eine Logikschaltung einen Rücksetzzugriff durch die zugehörige Verarbeitungseinheit auf die Statusmittel gewährt.

2. Vorrichtung nach Anspruch 1, bei welcher jede Logikschaltung auf einem Latch-Paar (40, 41) mit Rückkopplungs- und Steuerschaltung (44, 52, 55, 56, 57, 60; siehe Fig. 5) beruht oder in Form einer programmierbaren logischen Anordnung oder eines Teiles derselben vorliegt.

3. Vorrichtung nach Anspruch 1 oder Anspruch 2, bei welcher drei oder mehr Verarbeitungseinheiten vorhanden sind, wobei parallele Anforderungszustände auf einer Prioritätsbasis aufgelöst werden.

4. Vorrichtung nach irgendeinem vorstehenden Anspruch, bei welcher jede Verarbeitungseinheit ein taktgeberbasierendes Anforderungssignal (75, 76 Fig. 5) erzeugt, wodurch der Master-Status im Zeitschlitz um die Verarbeitungseinheiten geführt werden kann.

5. Vorrichtung nach irgendeinem vorstehenden Anspruch, bei welcher die Logikschaltungen in einer Ringformation gekoppelt sind und die Identität der aktuellen Master-Verarbeitungseinheit in den Gemeinschaftsbetriebsmitteln gespeichert ist.

## Revendications

1. Appareil de traitement de données comportant une série d'unités de traitement (10, 11, 31, 32) et une ressource partagée (15, 30), des moyens (14, 77) indicateurs d'un état, mémorisant (et par conséquent définissant), l'état partagé de la ressource, chaque unité de traitement demandant éventuellement l'accès à la ressource partagée et ainsi produisant par conséquent, de temps à autre, pour modifier l'état partagé, un signal de demande pour commander les moyens indicateurs d'état, ce signal ayant la capacité propre de ramener à l'état initial les moyens indicateurs d'état; et un dispositif maître/esclave servant à déterminer à n'importe quel instant donné quelle unité (et seulement unité) faisant partie des unités de traitement doit avoir accès, avec possibilité de remise à l'état initial, aux moyens indicateurs d'état, caractérisé en ce que:

(a) le dispositif maître/esclave est réparti uniformément entre les unités de traitement, sous la forme d'un circuit logique équivalent dans ou pour chaque unité de traitement, les circuits logiques étant interconnectés pour la transmission de couples de signaux;

(b) chaque circuit logique comporte quatre états stables (de façon appropriée l'état maître, l'état de libération, l'état esclave et l'état de demande), chaque état indiqué uniquement par un couple de signaux délivrés par ce circuit logique;

(c) chaque circuit logique peut réaliser la commutation d'un état maître à un état de libération lors de la réception d'un couple de signaux d'état de commande, depuis un état de libération à un état esclave, depuis un état esclave à un état de demande lors de la réception d'un signal de demande en provenance de l'unité de traitement, qui lui est associée, et depuis un état de demande à un état maître uniquement lors de la réception d'un couple de signaux d'état de libération et en l'absence de défaut dans toutes les autres séquences; et

(d) le passage d'un circuit logique à un état maître garantit l'accès avec remise à l'état initial de l'unité de traitement associée, aux moyens indicateurs d'état.

2. Appareil selon la revendication 1, dans lequel chaque circuit logique est basé sur un couple de bascules bistables (40, 41) comportant une réaction, et sur un circuit de commande (44, 52, 54, 56, 57, 60; voir figure 5) ou se présente sous la forme d'un réseau logique programmable ou d'une partie de ce dernier.

3. Appareil selon la revendication 1 ou 2, dans lequel il est prévu trois ou un plus grande nombre d'unités de traitement, les états de demandes concurrents étant résolus sur la base de priorités.

4. Appareil selon l'une quelconque des revendications précédentes, dans lequel chaque unité de traitement produit un signal de demande (75, 76, figure 5) tiré d'une horloge et grâce auquel l'état maître peut être partagè dans le temps entre les unités de traitement.

5. Appareil selon l'une quelconque des revendications précédentes, dans lequel les circuits logiques sont accouplés selon une formation an anneau et l'identité de l'unité de traitement maître actuelle est mémorisée dans la ressource partagée.

# 0 067 294

**Fig-1**

Fig-2 {
11 — MASTER STATE
00 — SLAVE STATE
01 — SLAVE REQUEST
10 — MASTER RESPONSE
}

**Fig-3**

**Fig-4**

0 067 294

Fig. 5

Fig. 6

Fig. 7

2